(19) Europäisches Patentamt
European Patent Office
Office européen des brevets

(11) Veröffentlichungsnummer: **0 102 916**
**A2**

(12) # EUROPÄISCHE PATENTANMELDUNG

(21) Anmeldenummer: **83730043.3**

(22) Anmeldetag: **27.04.83**

(51) Int. Cl.$^3$: **H 01 B 3/40**
H 01 B 3/02, C 08 L 63/00
C 08 G 59/68

(30) Priorität: **13.05.82 DE 3218287**

(43) Veröffentlichungstag der Anmeldung:
**14.03.84 Patentblatt 84/11**

(84) Benannte Vertragsstaaten:
**AT CH DE FR GB LI SE**

(71) Anmelder: **SIEMENS AKTIENGESELLSCHAFT**
**Berlin und München Wittelsbacherplatz 2**
**D-8000 München 2(DE)**

(72) Erfinder: **Ihlein, Walter, Dr.**
**Glockenturmstrasse 36**
**D-1000 Berlin 19(DE)**

(54) **Isolierband zur Herstellung einer mit einer heisshärtenden Epoxidharz-Säureanhydrid-Mischung imprägnierten Isolierhülse für elektrische Leiter.**

(57) Ein Isolierband zur Herstellung einer mit einer heißhärtenden Epoxidharz-Säureanyhdridhärter-Mischung imprägnierten Isolierhülse für elektrische Leiter enthält eine selbsthärtende Bindemittel-Beschleuniger-Mischung aus einem Epoxidharz als Bindemittel und ein quaternäres Oniumsalz als Beschleuniger. Um eine Migration der im Beschleuniger vorhandenen Ladungsträger zu verhindern, weist der Beschleuniger auch noch eine mit dem Bindemittel-Tränkharzgemisch reaktionsfähige Gruppe auf. Diese bewirkt eine Fixierung des Beschleunigers im während der Aushärtung entstehenden Netzwerk.

EP 0 102 916 A2

Croydon Printing Company Ltd.

0102916

SIEMENS AKTIENGESELLSCHAFT Unser Zeichen
Berlin und München VPA 82 P 4068

Isolierband zur Herstellung einer mit einer heißhärtenden Epoxidharz-Säureanhydrid-Mischung imprägnierten Isolierhülse für elektrische Leiter

Die Erfindung betrifft ein Isolierband zur Herstellung einer mit einer heißhärtenden Epoxidharz-Säureanhydridhärter-Mischung imprägnierten Isolierhülse für elektrische Leiter, insbesondere für die Wicklungsstäbe bzw. Spulen elektrischer Maschinen, bestehend aus auf eine flexible Unterlage aufgebrachten, flächigem, durchschlagsfestem anorganischem Material, wie z.B. Glimmerblättchen oder Feinglimmerschichten, das mit der Unterlage und miteinander und gegebenenfalls mit einer abschließenden Decklage mittels einer bei der Aushärtetemperatur des Tränkharzes selbsthärtenden Bindemittel-Beschleuniger-Mischung verklebt ist, die als Bindemittel Epoxidharz und als Beschleuniger quaternäre Oniumsalze folgender allgemeiner Strukturformel

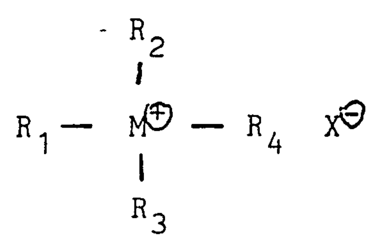

enthält, worin

M Atome der 5. Hauptgruppe des periodischen Systems, insbesondere N und P,

$R_1$, $R_2$, $R_3$ und $R_4$ gleiche oder verschiedene aliphatische, aromatische, heterocyclische oder arylaliphatische Reste, die noch weitere quaternäre Atome enthalten können, und

D 3 Win /12.05.1982

BAD ORIGINAL

$X^{\ominus}$ ein Anion, wie $Cl^{\ominus}$, $Br^{\ominus}$, $J^{\ominus}$, $F^{\ominus}$, $NO_3^{\ominus}$, $ClO_4^{\ominus}$.. ein organischer Säurerest, wie Acetat, ... oder ein komplexes Anion, wie z. B. $BF_4^{\ominus}$, $PF_6^{\ominus}$,....

bedeuten und diese Reste oder zwei davon außer an das Zentralatom auch aneinander gebunden sein können, oder auch das tertiäre Zentralatom in ein Ringsystem eingebaut sein kann, das gegebenenfalls Mehrfachbindungen enthält.

Ein derartiges Isolierband ist aus der DE-OS 30 03 477 bekannt.

Dieses Bindemittel-Beschleunigersystem ist für alle Epoxidharze und nicht nur für cycloaliphatische Epoxidharze wirksam und daher vielseitig einsetzbar. Außerdem hat die Verwendung quaternärer organischer Oniumsalze als Beschleuniger im Bindemittel-Beschleuniger-Gemisch eines zur Tränkung mit Epoxidharz-Säureanhydrid-Mischungen bestimmten Isolierbandes den überraschenden Vorteil, daß quaternäre Oniumsalze bei Epoxidverbindungen bei Raumtemperatur praktisch keine ionische Polymerisation bewirken. Ein derartig aufgebautes Isolierband kann deshalb bei Raumtemperatur bis zu mehr als drei Monate ohne Veränderung seiner Eigenschaften gelagert werden. Andererseits bewirken die quaternären Oniumsalze jedoch, daß die Gelierung einer Epoxidharz-Säureanhydrid-Mischung bereits bei Temperaturen um 60°C angeregt und wesentlich beschleunigt wird, so daß es möglich ist, den in die Isolierhülse eingedrungenen Tränkharzanteil in wirtschaftlich kurzer Zeit auszuhärten.

Das so gegebene Bindemittel-Beschleunigersystem bleibt mit Sicherheit unter den Bedingungen des Trocknens und

BAD ORIGINAL

Vorwärmens der aus den Isolierbändern gewickelten Isolierhülsen vor der Tränkung der Isolierungen voll im Tränkharz löslich, ohne einen Abfall in der Reaktivität gegenüber dem beim Tränkprozeß in die Isolierhülse eindringenden Tränkharz aufzuweisen.

Der bekannte Beschleuniger aus quaternären Oniumsalzen bestimmten Typs verbleibt bei der Aushärtung des Tränkharzes nach den derzeitigen Vorstellungen unverändert im System erhalten und verbindet sich nicht mit dem ausgehärteten Bindemittel-Tränkharzformstoff. Da er elektrisch geladene Teilchen enthält, besteht somit die Möglichkeit, daß bei den an der Isolierhülse während des Betriebes anliegenden Spannungen eine feldorientierte Wanderung oder Ausrichtung dieser Teilchen auftreten könnte. Die Folge wäre ein Absinken des Isolationswiderstandes.

Obwohl bisher bei den mit der bekannten Bindemittel-Beschleunigermischung hergestellten und untersuchten Isolierhülsen kein Hinweis auf eine derartige Migration in einem ausgehärteten Bindemittel-Tränkharzformstoff beoachtet werden konnte, liegt der Erfindung die Aufgabe zugrunde, bei einem Isolierband der eingangs beschriebenen Art, einen derartigen Vorgang von vornherein zu verhindern.

Zur Lösung dieser Aufgabe weist bei einem Isolierband der eingangs beschriebenen Art gemäß der Erfindung mindestens einer der Substituenten des Zentralatoms oder das mit dem Zentralatom gebildete heterocyclische System mindestens eine mit dem Bindemittel-Tränkharz-Gemisch reaktionsfähige Gruppe auf. Über diese Gruppe ist bei der Aushärtung des Tränkharzes eine Fixierung

BAD ORIGINAL

der Beschleunigerverbindung in das entstehende Netzwerk ermöglicht. Dadurch ist eine Migration des Beschleunigers nicht möglich.

Es ist besonders vorteilhaft, wenn der Beschleuniger eine Epoxidgruppe oder Hydroxylgruppe aufweist, weil diese besonders gut lagerstabile Isolierbänder ergeben. Dies gilt auch, wenn der Beschleuniger sowohl Hydroxylals auch Epoxidgruppen enthält.

Andere geeignete reaktionsfähige Reste sind Merkaptan-(SH) oder Carboxyl(COOH)-Gruppen, Amino- oder Imino ($NH_2$, NH-)-Gruppen, die einzeln oder vermischt vorhanden sein können.

Beispiele für derartige quaternäre Oniumsalze sind z.B. die Umsetzungsprodukte entsprechender tertiärer Amine bzw. Phosphine, wie Tributylamin, Dimethylbenzylamin, 1.2 Dimethylimidazol, Pyridin, Tributylphosphin, Triphenylphosphin mit Verbindungen, wie Epichlorhydrin, Epibromhydrin, 2.3 Dihydroxypropylchlorid bzw. -bromid oder Halogenwasserstoffadditionsprodukte von Epoxid- bzw. Polyepoxidverbindungen.

Bei dem gemäß der Erfindung ausgebildeten Isolierband können als Bindemittel folgende Epoxidharze verwendet werden:

Epoxyverbindungen wie Bisphenol A-Diglycidyläther, Bisphenol F-Diglycidyläther, Resorcin-Diglycidyläther, epoxidierte Phenol- bzw. Kresolnovolake sowie N-Glydylverbindungen, wie z.B. heterocyclische Epoxidverbindungen auf Hydantoinbasis. Weitere Epoxide sind in dem "Handbook of Epoxy Resin" von H. Lee und K. Neville (Mc. Craw Hill Book Co., 1967) aufgeführt.

BAD ORIGINAL

Besonders vorteilhaft ist die Verwendung höher funktioneller epoxidierter Phenol- oder Kresolnovolake und Hydantoinepoxidharze, die aufgrund ihrer hohen Viskosität und Klebkraft ausgezeichnete Bindemittel für die vorgesehenen Isolierbänder sind.

Der Anteil an Bindemittel wird bei der Herstellung des Isolierbandes nicht zu hoch gewählt, damit das Tränkharz bei der Imprägnierung gut in die im Band befindlichen Hohlräume eindringen kann. Der Gewichtsanteil der als Bindemittel zur Verklebung des Isolierbandes verwendeten Verbindungen liegt deshalb etwa zwischen 3 und 10%, bezogen auf das Gesamtgewicht des Isolierbandes. Bei einem solchen Anteil an Bindemittel empfiehlt es sich, die Menge des Beschleunigers etwa in der Größenordnung 0,05 bis 5%, bezogen auf das Gesamtgewicht des Isolierbandes, festzusetzen. Die Menge des dem Isolierband bei der Herstellung zugesetzten Beschleunigers hängt davon ab, wieviel anorganisches Material, z.B. Glimmer, pro Unterlage das Band enthält und wie hoch der Anteil des zur Verklebung verwendeten Bindemittels im Isolierband ist.

Eine weitere Verbesserung der aus Isolierbändern gemäß der Erfindung aufgebauten Isolierungen, die eine hohe Steifigkeit aufweisen, ist dadurch möglich, daß das Bindemittel-Beschleuniger-Gemisch als Härter wirkende Beimengungen enthält, die erst bei Aushärtetemperatur der heißhärtenden Epoxidharz-Säureanhydrid-Michung wirksam werden. Dadurch wird die Wärmeformbeständigkeit sowohl der selbsthärtenden Bindemittel-Beschleuniger-Mischung als auch die der Mischung zwischen Bindemittel und eingedrungenem Tränkharz weiter erhöht. Diese Beimengungen beeinträchtigen jedoch nicht die Lagerfähigkeit des Isolierbandes. Auch dieses Bindemittel-Beschleuniger-Gemisch mit Beimengungen bleibt unter den Be-

BAD ORIGINAL

dingungen des Trocknens und Vorwärmens vor der Tränkung der Isolierung voll im Tränkharz löslich.

Besonders geeignet sind als Härter wirkende Beimengungen, die bis angenähert 80°C im Bindemittel unlöslich sind und bezogen auf die Aushärtetemperatur einen genügend hohen Schmelzpunkt haben, wie z.B. das 2-Phenyl-4.5 Dihydroxymethylimidazol. Derartige Beimengungen zeigen erst bei den Temperaturen der Aushärtung ihre Aktivität, während das Gelieren des in die Isolierhülse eindringenden Tränkharzes im Temperaturbereich um 60°C durch die im Bindemittel ebenfalls vorhandenen quaternären Oniumverbindungen angeregt wird.

Als Beimengungen sind ferner Komplexverbindungen oder Addukte geeignet, die erst bei den Temperaturen der Aushärtung in härtungswirksame Komponenten zerfallen. Dies sind Verbindungen, wie sie in der DE-OS 28 11 764 beschrieben werden, oder Salze von Trimellitsäure mit Imidazolen, wie z. B. 1-Cyanoäthyl-2-Methylimidazol-Trimellitat.

Es ist ferner zweckmäßig, als Beimengungen eingekapselte oder an Stoffen mit großer aktiver Oberfläche adsorbierte Härtersysteme zu verwenden, die erst bei Aushärtetemperatur oder durch Austausch mit anderen Verbindungen freigegeben und wirksam werden. So können z. B. in Molekularsieben adsorbierte tertiäre Amine verwendet werden.

Die Menge dieser dem Bindemittel zugemischten Härter hängt von deren spezifischer Wirksamkeit ab und umfaßt den Bereich zwischen 0,05 bis 10 Gew.% bezogen auf das Bindemittel.

Im folgenden wird das Verhalten von gemäß der Erfindung

aufgebauten Isolierbändern anhand der Tabellen 1 bis 3 näher erläutert:

Tabelle 1:

| Epoxid-harz | Be-schleu-niger | Gew.T Beschl. auf 100 Gew.T Epoxid-harz | Lagerstabilität der Mischungen (in Tgn) bei R.T. | 70°C | Gelierzeit bei 130°C (Std) |
|---|---|---|---|---|---|
| A | 1 | 10 | >100 | >30 | 120 |
| B | 1 | 10 | >100 | >30 | 100 |
| | 2 | 25 | >100 | >30 | 80 |
| C | 1 | 25 | >100 | >30 | 150 |

Die Tabelle 1 enthält eine Zusammenstellung über die Lagerstabilität der in dünnen Schichten in einem offenen Gefäß gelagerten Mischungen dreier charakteristischer Epoxidharztypen A, B, C mit verschiedenen quaternären als Beschleuniger dienenden Verbindungen 1 und 2. Es handelt sich hierbei um folgende Beschleuniger:

1. Umsetzungsprodukt von 1-Methylimidazol (1 Mol) und Epibromhydrin (1 Mol).

2. Umsetzungsprodukt von 1-Methylimidazol (1 Mol) mit dem Additionsprodukt aus 1 Mol Bisphenol A-Diglycidyläther und 1 Mol Bromwasserstoff.

Die Verbindungen wurden unter Erwärmen (bei 70°C) oder mit Hilfe von $MeCl_2$ als Lösungsvermittler in den betreffenden Epoxidharzen A, B und C gelöst, wobei

A einen Glycidyläther des Bisphenol A mit einem Epoxidäquivalent von 174 ± 2 und einer Viskosität von 5000 ± 500 mPas bei 25°C bedeutet,

B ein halbfester epoxidierter Phenolnovolak mit einem Epoxidäquivalent von 178 ± 5 und einer Viskosität von 1600 ± 300 mPas bei 80°C und

C ein halbfestes trifunktionelles Hydantoinepoxidharz mit einem Epoxidäquivalent von 166 und einer Viskosität von ca 6000 mPas bei 80°C.

Aus der Tabelle 1 geht die geringe Wirksamkeit dieser Verbindungen bezüglich einer ionischen Polymerisation im Temperaturbereich von ca. 70 bis 80°C deutlich hervor.

Tabelle 2:

| Bindemittel-Beschl.-mischung | Gew.T. Bindemittel-Beschl. Misch. auf 100 Gew.T Epoxidh.-Säureanhyd. | Gelierzeit (Min) d. Epoxidh.-Säureanhyd. Bindemittel-Beschleuniger-Mischung | |
|---|---|---|---|
| | | 70°C | 90°C |
| A1 | 22 | 124 | 31 |
| B2 | 25 | 114 | 28 |
| C1 | 22 | 205 | 58 |

BAD ORIGINAL

Tabelle 2 zeigt die ausgezeichnete Beschleunigerwirkung dieser Verbindungstypen als Bindemittel-Beschleuniger-Mischung auf Epoxidharz-Säureanhydrid-Mischungen. Die Versuche wurden mit einer Epoxidharz-Säureanhydrid-Mischung von einem Glycidyläther des Bisphenol A (Epoxidharz A) und Methylhexahydrophthalsäureanhydrid durchgeführt.

Die in den Tabellen aufgeführten Beispiele zeigen deutlich die Wirkungen der quaternären Oniumverbindungen als Beschleunigeranteil in einer Bindemittel-Beschleuniger-Mischung eines gemäß der Erfindung ausgebildeten Isolierbandes. Die in den hier beschriebenen Bindemittel-Beschleuniger-Kombinationen ausgeführten Isolierbänder sind bei Raumtemperatur mehr als 3 Monate lagerfähig und bei der Aushärtung der Isolierhülse nach dem Tränken mit einem Epoxidharz-Säureanhydrid-Gemisch ist durch die besondere Auswahl des Bindemittel-Beschleuniger-Gemisches die Gewähr gegeben, daß alle Stellen ausgehärtet werden, d. h. auch Stellen, an denen das Bindemittel nicht durch das Tränkharz resorbiert wurde, da das Bindemittel-Beschleuniger-Gemisch selbstaushärtend ist. Man erhält somit eine Isolierung mit sehr guten elektrischen Eigenschaften und einer hohen Wärmeformbeständigkeit.

<u>Tabelle 3:</u>

| Epoxidharz | Beschleuniger | Härter | Gew.T Härter auf 100 Gew.T Epoxidh. | Lagerstabilität d.Mischungen Tgen/bei RT | 70 °C | Gelierzeit bei 130 °C (Std) |
|---|---|---|---|---|---|---|
| B | Umsetzungsprodukt von 1 Mol (1-Methylimidazol) und 1 Mol (Epibromhydrin) | 1 | 5 | 100 | 5 | 10 |
| D | | 2 | 5 | 100 | 3 | 8 |

BAD ORIGINAL

Die Tabelle 3 enthält Angaben über die Lagerstabilität von Bindemittel-Mischungen mit einer quaternären Oniumverbindung als Beschleuniger und einigen spezifischen Härtern als Beimengung für diese Bindemittel-Beschleuniger-Mischung. Auch hier geht deutlich eine bis zum Temperaturbereich von 70°C geringe Reaktivität der Beimengungen auf das Bindemittel des Isolierbandes hervor. Der Vergleich mit Tabelle 1 zeigt für den Temperaturbereich um 70°C eine insgesamt etwas höhere Reaktivität, doch ist bei Raumtemperatur auch hier die ausgezeichnete Stabilität der Mischungen gegeben. Als Bindemittel wurden z.B. das Epoxidharz B und das Epoxidharz D = Tetraglycidyl-p.p'Methylendianilin mit einem Epoxidäquivalent von 130 ± 10 und einer Viskosität von ca 1800 mPas bei 80°C verwendet. Als Beimengungen dienten die Härter 1 und 2, wobei

1: 2.4-Diamino-6 (2'Methylimidazolyl-(1')äthyl-s-Triazin

2: 2 Phenyl-4.5 Dihydroxymethylimidazol

bedeutet.

Durch die mit Hilfe der Beimengungen erreichbare Erhöhung des Glaspunktes des gehärteten Bindemittels um ca 30 bis 40°C wird die Steifigkeit der Isolierhülse weiter erhöht und deren mechanische Festigkeit bei hohen Temperaturen weiter gesteigert.

9 Patentansprüche

0 Figur

BAD ORIGINAL

Patentansprüche

1. Isolierband zur Herstellung einer mit einer heißhärtenden Epoxidharz-Säureanhydridhärter-Mischung imprägnierten Isolierhülse für elektrische Leiter, insbesondere für die Wicklungsstäbe bzw. Spulen elektrischer Maschinen, bestehend aus auf eine flexible Unterlage aufgebrachtem, flächigem, durchschlagsfestem anorganischem Material, wie z.B. Glimmerblättchen oder Feinglimmerschichten, das mit der Unterlage und miteinander und gegebenenfalls mit einer abschließenden Decklage mittels einer bei der Aushärtetemperatur des Tränkharzes selbsthärtenden Bindemittel-Beschleuniger-Mischung verklebt ist, die als Bindemittel Epoxidharz und als Beschleuniger quaternäre Oniumsalze folgender allgemeiner Strukturformel

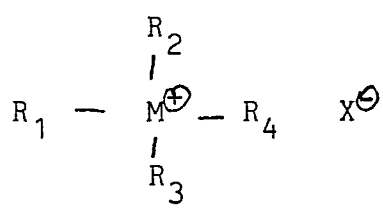

enthält, worin

M Atome der 5. Hauptgruppe des periodischen Systems, insbesondere N und P,

$R_1$, $R_2$, $R_3$ und $R_4$ gleiche oder verschiedene aliphatische, aromatische,heterocyclische oder arylaliphatische Reste, die noch weitere quaternäre Atome enthalten können, und

$X^{\ominus}$ ein Anion, wie $Cl^{\ominus}$, $Br^{\ominus}$, $J^{\ominus}$, $F^{\ominus}$, $NO_3^{\ominus}$, $ClO_4^{\ominus}$... ein organ. Säurerest, wie Acetat, ... oder ein komplexes Anion, wie z.B. $BF_4^{\ominus}$, $PF_6^{\ominus}$, .....

bedeuten und diese Reste oder zwei davon außer an das Zentralatom auch aneinander gebunden sein können, oder

BAD ORIGINAL

auch das tertiäre Zentralatom in ein Ringsystem eingebaut sein kann, das gegebenenfalls Mehrfachbindungen enthält, dadurch gekennzeichnet, daß mindestens einer der Substituenten ($R_1$, $R_2$, $R_3$, $R_4$) des Zentralatoms (M) oder das mit dem Zentralatom (M) gebildete heterocyclische System mindestens eine mit dem Bindemittel- Tränkharzgemisch reaktionsfähige Gruppe aufweist.

2. Isolierband nach Anspruch 1, dadurch gekennzeichnet, daß der Beschleuniger Epoxidgruppen enthält.

3. Isolierband nach Anspruch 1, dadurch gekennzeichnet, daß der Beschleuniger Hydroxylgruppen enthält.

4. Isolierband nach Anspruch 1, 2 oder 3, dadurch gekennzeichnet, daß der Beschleuniger reaktionsfähige Gruppen unterschiedlicher Art enthält.

5. Isolierband nach Anspruch 1, 2 oder 3, dadurch gekennzeichnet, daß das Bindemittel-Beschleuniger-Gemisch als Härter wirkende Beimengungen enthält, die erst bei Aushärtetemperatur der heißhärtenden Epoxidharz-Säureanhydridhärter-Mischung wirksam werden.

6. Isolierband nach Anspruch 5, dadurch gekennzeichnet, daß die Beimengungen des Bindemittels in diesem bis angenähert 80°C unlöslich sind und bezogen auf die Aushärtetemperatur einen genügend hohen Schmelzpunkt haben.

7. Isolierband nach Anspruch 6, dadurch gekennzeichnet, daß als Beimengung 2-Phenyl-4.5 Dihydroxymethylimidazol verwendet ist.

8. Isolierband nach Anspruch 5, dadurch gekennzeichnet, daß als Beimenungen Komplexverbindungen oder Addukte verwendet sind, die erst bei der Aushärtetemperatur in härtungswirksame Komponenten zerfallen.

9. Isolierband nach Anspruch 5, dadurch gekennzeichnet, daß als Beimengungen eingekapselte oder an Stoffen mit großer aktiver Oberflächen adsorbierte Härtersysteme verwendet sind, die erst bei Aushärtetemperatur oder durch Austausch mit anderen Verbindungen freigegeben und wirksam werden.